# EUROPÄISCHE PATENTSCHRIFT

(11) **EP 2 072 972 B1**
(45) Veröffentlichungstag und Bekanntmachung des Hinweises auf die Patenterteilung: **13.04.2016**
(21) Anmeldenummer: 07024930.5
(22) Anmeldetag: 21.12.2007
(51) Int. Cl.: G01F 1/66

(54) **Vorrichtung zum Messen der Bewegung eines Fluids in einem Rohr**
Device for measuring the movement of a fluid in a pipe
Dispositif de mesure du mouvement d'un fluide dans un tuyau

(43) Veröffentlichungstag der Anmeldung: 24.06.2009
(73) Patentinhaber: SICK Engineering GmbH, 01458 Ottendorf-Okrilla (DE)
(72) Erfinder: Dietzen, Markus, 66589 Merchweiler (DE)
(74) Vertreter: Westphal, Mussgnug & Partner Patentanwälte mbB

(56) Entgegenhaltungen:
- EP-A- 0 537 735
- EP-A- 0 588 599
- US-A- 5 987 997
- US-A- 6 047 602
- US-A- 6 067 861

## Beschreibung

Die Erfindung betrifft eine Vorrichtung zum Messen der Bewegung eines Fluids in einem Rohr gemäß dem Oberbegriff des Patentanspruchs 1.

Bei der Bewegung eines Fluids durch ein Rohr ist es wesentlich, den Volumenstrom bestimmen zu können, um die durch das Rohr getretene Menge an Fluid, insbesondere Gas oder Flüssigkeit, bestimmen zu können. Dabei soll der Volumenwert ausreichend präzise sein, um insbesondere bei Transaktionen von Fluidvolumina zwischen Kunden und Lieferanten eine geeignete Basis zur Berechnung der Kosten der übertragenen Fluidvolumina bilden zu können. Eine Möglichkeit zur Bestimmung des Volumenstroms beruht auf der Basis von Ultraschalldifferenzlaufzeitmessungen, welche nach dem folgenden Verfahren arbeiten. An der Wand einer Leitung, durch die ein Fluid strömt, sind zwei Ultraschallwandler diametral und in Längsrichtung gegeneinander versetzt angeordnet. Es wird die Laufzeit bestimmt, die ein Ultraschallpuls des ersten Ultraschallwandlers benötigt, um zu dem zweiten Ultraschallwandler zu gelangen, sowie die Laufzeit, die ein von dem zweiten Ultraschallwandler ausgesandter Ultraschallpuls benötigt, um den ersten Ultraschallwandler zu erreichen. Da der Ultraschallpuls sich einmal mit und einmal gegen die Strömungsrichtung ausbreitet, liefert die Laufzeitdifferenz die mittlere Strömungsgeschwindigkeit entlang dieses Schallpfades. Eine derartige Anordnung zeigt bspw. die EP 1 094 305 A2.

Da die Geschwindigkeitsverteilung über dem Rohrleitungsquerschnitt in der Regel nicht symmetrisch zur Rohrleitungsachse ist, sind verschiedene Anordnungen bekannt, um ein genaueres Bild über die Geschwindigkeitsverteilung zu erhalten. Bspw. zeigt die DE 699 07 913 T2 in einer ersten Ebene drei über den Umfang verteilte Ultraschallwandler und in einer zweiten Ebene drei weitere über den Umfang verteilt angeordnete Ulträschallwandler, um so eine größere Anzahl von Schallpfaden zu erhalten. Aber auch die dort beschriebene Anordnung genügt noch nicht, um ein ausreichend präzises Bild der Geschwindigkeitsverteilung zu erhalten, welches eine hochpräzise Bestimmung des Volumenstromes ermöglicht.

Bekannt ist es weiterhin, vier oder mehr Ebenen parallel zueinander versetzt und parallel zur Längsachse des Rohres anzuordnen, wobei in jeder Ebene zwei Pfade gekreuzt zueinander verlaufen (vgl. "Performance of 18 path Acoustic Flowmeters", James T. Walsh - Accusonic Technologies). Bei einer derartigen Anordnung verlaufen durch das Rohr eine Vielzahl von Pfaden, die eine hohe Informationsdichte ermöglichen: Allerdings kann mit einer derartigen Anordnung keine unsymmetrische Verteilung der Geschwindigkeitskomponenten in axialer und tangentialer Richtung in dem Rohr ermittelt werden.

Aus der Veröffentlichung von Deddy Kurniadi und Amoranto Tris-nobudi: "A Multi-Path Ultrasonic Transit Time Flow Meter Using a Tomography Method for Gas Flow Velocity Profile Measurement", Part. Part. Syst. Charact. 23 (2006) 330-338, ist eine Anordnung von acht Ultraschallsendern in einer Ebene und weiteren acht Ultraschallempfängern in einer zweiten Ebene angegeben, wobei der von einem-Ultraschallsender emittierte Ultraschallpuls gleichzeitig von allen acht Ultraschallempfängern detektiert wird. Es wird die Laufzeit für jeden dieser Pfade ermittelt, wobei die Ultraschallpulse lediglich stromaufwärts emittiert werden. Durch die Vielzahl der Pfade wird eine derart hohe Informationsdichte erreicht, dass mit Hilfe einer tomographischen Rekonstruktionsmethode ein Geschwindigkeitsprofil ermittelt werden kann. Mit dieser Anordnung ist es jedoch nicht möglich, nicht axiale Komponenten der Strömung zu eliminieren, was im Fall von nicht axialen Geschwindigkeitskomponenten zu einem verfälschten Ergebnis führt.

Die bekannten Anordnungen haben jedoch mehrere Nachteile. Da die Geschwindigkeitsverteilung über dem Rohrleitungsquerschnitt nicht symmetrisch zur Rohrleitungsachse ist, d. h. eine unsymmetrische Verteilung der Geschwindigkeit vorliegt, führt die Drehung der Anordnung von Ultraschallwandlern relativ zum Geschwindigkeitsprofil zu einem veränderten Messwert. Das Verhalten des Messgerätes hängt somit von der Einbaulage des Messgerätes ab, sodass für diesen Fall eine systematische Unsicherheit des Messgerätes gegeben ist. Ferner hat die Notwendigkeit, die Ultraschallpfade in einem Winkel zur Rohrleitung einzubauen, zur Folge, dass nicht axiale Geschwindigkeitskomponenten in ihrer Projektion im Messergebnis der Einzelpfade auftauchen und damit den Messwert verfälschen. Diese Überlagerung von axialen und nicht axialen Geschwindigkeitskomponenten führt ebenfalls zu einem systematischen Fehler bei der Messung von Volumenströmen mit Ultraschall. Ein weiterer Nachteil von Strömungsmessgeräten auf Ultraschallbasis ist häufig eine Reynoldszahlabhängigkeit der Messwerte und somit eine Nichtlinearität des Messgerätes.

Als weiterer Stand der Technik werden die US 6,067,861 A und die US 6,047,602 A genannt.

Die Aufgabe der Erfindung besteht daher darin, eine Vorrichtung und ein Verfahren bereit zu stellen, mit welchem der Volumenstrom eines Fluids möglichst präzise ermittelt werden kann.

Die Aufgabe der Erfindung wird gelöst durch eine Vorrichtung mit den Merkmalen des Patentanspruchs 1 und ein Verfahren mit den Merkmalen des Patentanspruchs 11.

Vorteilhafte Ausgestaltungen und Weiterbildungen der Erfindung sind in den Unteransprüchen angegeben.

Die Erfindung beruht auf der Erkenntnis, dass durch in einer Ebene parallel zur Längsachse hintereinanderliegende Pfade, welche im Winkel zueinander verlaufen, nicht axiale und axiale Geschwindigkeitskomponenten in dieser Ebene getrennt werden können und die Wirkung von nicht axialen Geschwindigkeitskomponenten kompensiert werden kann, wobei zusätzlich durch wenigstens zwei parallel versetzt liegende Ebenen die nötige Informationsdichte über den Durchmesser des Rohres gewährleistet werden kann und schließlich durch zwei im Winkel zueinander verlaufenden Sätze von Ebenen die Richtungsabhängigkeit der Messung bzw. die Abhängigkeit der Messung von der Einbaulage des Messgerätes eliminiert werden kann. Die erfindungsgemäße Vorrichtung zum Messen der Bewegung eines Fluids in einem Rohr mit einer Längsachse durch Berechnen der Differenz zwischen Ultraschalllaufzeiten entlang eines Pfades in der einen und der anderen Richtung weist daher in dem Rohr einen ersten Satz von wenigstens zwei zueinander parallel versetzt liegenden Ebenen und einen zweiten Satz von wenigstens zwei zueinander parallel versetzt liegenden Ebenen auf, wobei jede der Ebenen parallel zur Längsachse des Rohres angeordnet ist, wobei die beiden Sätze von Ebenen in einem Winkel zueinander verlaufen und wobei in jeder der Ebenen wenigstens zwei Pfade in einem Winkel zueinander verlaufen.

Besonders bevorzugt weist jeder der beiden Sätze jeweils vier parallel versetzt zueinander liegende Ebenen auf, sodass innerhalb eines Satzes von Ebenen an sowohl mathematisch als auch praktisch bewährten Quadraturintegrationspunkten der bekannten Anordnung von acht Pfaden (vgl. bspw. der Artikel von Walsh) festgehalten werden kann.

Besonders bevorzugt sind in jedem der beiden Sätze von Ebenen die Ebenen gleichmäßig, insbesondere symmetrisch, über einen Durchmesser des Rohres verteilt angeordnet, um eine möglichst gleichmäßig flächendeckende Informationsdichte über dem Querschnitt des Rohres erhalten zu können.

Aus diesem Grund sind vorzugsweise auch die beiden Sätze von Ebenen im rechten Winkel zueinander angeordnet.

Gemäß einer besonders bevorzugten Ausführungsform der Erfindung entspricht in jedem der beiden Sätze von Ebenen die Lage der Ebenen den mathematisch idealen Stützstellen für numerische Integration, um somit geeignete Voraussetzungen für die nachfolgende Auswertung der erhaltenen Messwerte zu liefern.

Vorzugsweise ist jeder der Pfade entweder zwischen zwei Ultraschallwandlern-oder zwischen einem Ultraschallwandler und einer Reflektorfläche gebildet. Die Verwendung von zwei Ultraschallwandlern ermöglicht entlang eines Pfades direkt die herkömmliche Differenzlaufzeitmessung. Wird ein Pfad zwischen einem Ultraschallwandler und einer Reflektorfläche gebildet, muss der von dem Ultraschallwandler emittierte Ultraschallpuls nach Reflexion an der Reflektorfläche von einem weiteren Ultraschallwandler detektiert werden, wobei die Laufzeit über die gesamte Pfadlänge gemessen wird. Dadurch, dass somit die Laufzeit über insgesamt zwei Pfade, die in beide Richtungen durch das Rohr laufen, gemessen wird, werden Komponenten, die entlang des einen Pfades den Ultraschallpuls bspw. beschleunigen, auf dem Rückweg wieder verzögert, sodass derartige Störungen ohne zusätzliche Berechnungen bereits eliminiert werden.

Vorzugsweise sind die Ultraschallwandler und/oder die Reflektorflächen an der Rohrwandung angeordnet, wobei sie bspw. von außen auf die Rohrwandung aufgesetzt oder in die Rohrwandung eingebracht werden können.

In einer bevorzugten alternativen Ausführungsform sind in jeder Ebene vier Ultraschallwandler angeordnet, sodass jeder Pfad durch zwei Ultraschallwandler begrenzt wird. Vorzugsweise sind die Ultraschallwandler dabei derart angeordnet, dass sich die beiden Pfade innerhalb des Rohres kreuzen. Gemäß einer alternativen bevorzugten Ausführungsform der Erfindung sind in jeder Ebene drei Ultraschallwandler angeordnet, wobei ein Ultraschallwandler am Ende der beiden Pfade liegt, sodass die beiden Pfade in der Ebene innerhalb des Rohres ein V bilden. Dazu weist vorzugsweise wenigstens der an der Spitze des V liegende Ultraschallsender einen Öffnungswinkel derart auf, dass ein von ihm ausgesendeter Ultraschallpulse entlang beider Pfade die am Ende der Pfade angeordneten Ultraschallwandler erreicht. Gemäß einer weiteren bevorzugten alternativen Ausführungsform der Erfindung sind in jeder Ebene zwei Ultraschallwandler und eine Reflektorfläche angeordnet, wobei die Reflektorfläche am Ende der beiden Pfade liegt, und somit an der Spitze der V-förmigen Anordnung der beiden Pfade angeordnet ist. Ein von einem der beiden Ultraschallwandler emittierter Ultraschallpuls kann somit über die Reflektorfläche in den anderen Ultraschallwandler reflektiert werden. Radiale Strömungskomponenten werden auf diese Weise bereits eliminiert, ohne aufwändige Berechnungen durchführen zu müssen.

Gemäß einer besonders bevorzugten Ausführungsform der Erfindung weist jeder der Ultraschallwandler einen derartigen Öffnungswinkel des emittierten bzw. detektierten Ultraschallpulses auf, dass der Ultraschallpuls auch von in benachbarten Ebenen angeordneten Ultraschallwandlern detektierbar ist. Auf diese Art und Weise werden zusätzliche Ultraschallpfade gebildet, welche die Informationsdichte über den Querschnitt des Rohres weiter erhöhen und somit eine bessere Grundlage für die Bestimmung der Bewegung des Fluids durch das Rohr bilden, ohne die Zahl der nötigen Ultraschallwandler weiter erhöhen zu müssen.

Das erfindungsgemäße Verfahren zum Messen der Bewegung eines Fluids in einem Rohr mit einer Längsachse berechnet die Differenz zwischen Ultraschalllaufzeiten entlang der Pfade in der einen und der anderen Richtung einer Vorrichtung gemäß der Erfindung. Die gemessenen Ultraschalllaufzeiten und/oder die berechneten Differenzen der gemessenen Ultraschalllaufzeiten werden vorzugsweise als Basis zur Lösung von analytischen Gleichungen, welche die Rohrleitungsströmung modellieren, herangezogen. Die gemessenen Ultraschalllaufzeiten werden ebenfalls verwendet, um den Volumenstrom auf der Basis von Pfadgewichten zu ermitteln.

Gemäß einer besonders bevorzugten Ausführungsform der Erfindung ist eine tomographische Rekonstruktion des Strömungsprofils in dem Rohr durch eine Kombination der gemessenen Ultraschalllaufzeiten und/oder der berechneten Differenzen der gemessenen Illtraschalllaufzeiten, der physikalischen Gesetze der Rohrleitungsströmung und ggf. weiteren mathematischen Algorithmen möglich. Auf die gleiche Art und Weise können vorzugsweise auch die Temperaturverteilung und/oder Turbulenz der Strömung ermittelt werden. Bei einer derartigen Rekonstruktion wird eine Reynoldszahlabhängigkeit der Messwerte und somit eine Nichtlinearität des Messgeräts beseitigt oder zumindest stark reduziert.

Die Erfindung wird anhand der nachfolgenden Figuren ausführlich erläutert.

Es zeigt
- Fig. 1: eine Projektion entlang der Achse eines Rohres eines Teils der an dem Rohr gemäß einem ersten Ausführungsbeispiel angeordneten Ultraschallwandler,
- Fig. 2: die Darstellung zusätzlicher Ultraschallpfade für die Anordnung von Ultraschallwandlern gemäß Fig. 1,
- Fig. 3a: eine Seitenansicht eines Teiles der Ultraschallwandler gemäß einem ersten Ausführungsbeispiel der Erfindung,
- Fig. 3b: eine Seitenansicht eines Teiles der Ultraschallwandler-gemäß einem zweiten Ausführungsbeispiel der Erfindung,
- Fig. 3c: eine Seitenansicht eines Teiles der Ultraschallwandler und Reflektorflächen gemäß einem dritten Ausführungsbeispiel der Erfindung,
- Fig. 4a: eine perspektivische Ansicht der Anordnung eines ersten Teiles der Ultraschallwandler der Anordnung des zweiten Ausführungsbeispieles gemäß Fig. 3b,
- Fig. 4b: eine Draufsicht auf eine der Ebenen der Anordnung gemäß Fig. 4a,
- Fig. 4c: eine perspektivische Ansicht der Anordnung eines zweiten Teiles der Ultraschallwandler der Anordnung des zweiten Ausführungsbeispieles gemäß Fig. 3b und
- Fig. 4d: eine Draufsicht auf eine der Ebenen gemäß Fig. 4c.

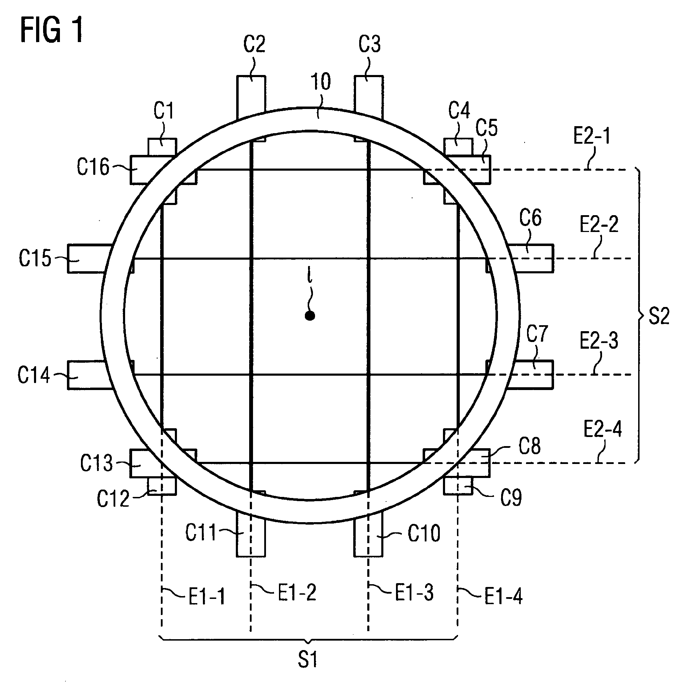

Fig. 1 zeigt die Projektion der Anordnung einer ersten Hälfte von Ultraschallwandlern C1-C16 am Außenumfang eines Rohres 10 auf einen Schnitt senkrecht zur Längsachse 1 des Rohres 10. Parallel zur Längsachse 1 des Rohres 10 verläuft ein erster Satz S1 von vier parallel versetzt zueinander liegenden Ebenen E1-1, E1-2, E1-3 und E1-4, welche symmetrisch zueinander über einen Durchmesser des Rohres 10 angeordnet sind. Ferner verläuft ein zweiter Satz S2 von vier parallel versetzt zueinander liegenden Ebenen E2-1, E2-2, E2-3 und E2-4 ebenfalls parallel zur Längsachse 1 durch das Rohr 10, wobei der zweite Satz S2 im von Ebenen senkrecht zu dem ersten Satz S1 von Ebenen verläuft, sodass jede der Ebenen E2-1, E2-2, E2-3 und E2-4 senkrecht zu jeder der Ebenen E1-1, E1-2, E1-3 und E1-4 verläuft. Auf der Schnittlinie der Ebenen E1-1, E1-2, E1-3, E1-4, E2-1, E2-2, E2-3, E2-4 mit der Wandung des Rohres 10 sind die sechzehn Ultraschallwandler C1-C16 angeordnet, welche entweder am Außenumfang des Rohres 10 angeordnet oder in die Wandung des Rohres 10 eingebracht sein können. In der Ebene E1-1 liegen die Ultraschallwandler C1 und C12, in der Ebene E1-2 die Ultraschallwandler C2 und C11, in der Ebene E1-3 die Ultraschallwandler C3 und C10, in der Ebene E1-4 die Ultraschallwandler C4 und C9, in der Ebene E2-1 die Ultraschallwandler C5 und C16, in der Ebene E2-2 die Ultraschallwandler C6 und C15, in der Ebene E2-3 die Ultraschallwandler C7 und C14 und in der Ebene E2-4 die Ultraschallwandler C8 und C13. Die Ultraschallwandler C1-C16 sind dabei derart ausgerichtet, dass der jeweils zugeordnete Ultraschallwandler im Öffnungskegel des Ultraschallwandlers liegt.

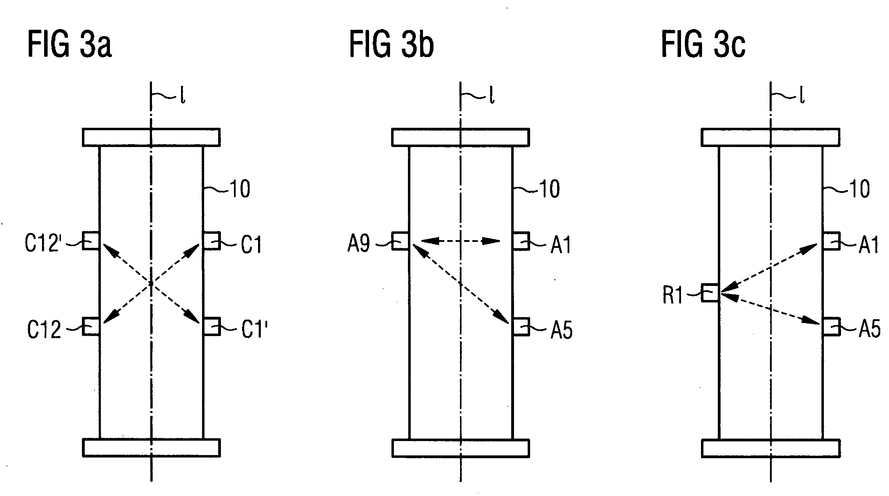

Wie Fig. 3a zu entnehmen ist, handelt es sich bei den Ultraschallwandlern C1-C16 jedoch nur um eine Hälfte der Ultraschallwandler, die in dieser ersten erfindungsgemäßen Anordnung an dem Außenumfang des Rohres 10 angeordnet sind. Fig. 3a zeigt eine Seitenansicht der Anordnung der Ultraschallwandler an dem Rohr 10, insbesondere eine Sicht auf die Ebene E1-1. Entlang der Schnittlinie der Ebene E1-1 mit der Wandung des Rohres 10 sind, nicht nur die Ultraschallwandler C1, C12, sondern zusätzlich zwei Ultraschallwandler C1', C12' angeordnet. Zu jedem der in Fig. 1 dargestellten Ultraschallwandler C1-C16 ist somit ein zweiter Ultraschallwandler vorhanden, sodass gemäß dieser Anordnung insgesamt zweiunddreißig Ultraschallwandler über den Umfang des Rohres 10 verteilt angeordnet sind. Zwischen den beiden Ultraschallwandlern C1, C12 wird ein erster Ultraschallpfad in der Ebene E1-1 gebildet, während durch die beiden Ultraschallwandler C1' C12' ein zweiter Ultraschallpfad in der Ebene E1-1 gebildet ist. Die beiden Pfade kreuzen sich im Inneren des Rohres 10. In jeder der Ebenen E1-1, E1-2, E1-3, E1-4, E2-1, E2-2, E2-3, E2-4 sind somit zwei Ultraschallpfade im Winkel zueinander angeordnet, welche jeweils durch zwei Ultraschallwandler begrenzt werden. Durch diese Dopplung der Pfade in axialer Richtung des Rohres 10, d. h. durch die Anordnung von zwei Pfaden in einer der Ebenen E1-1, E1-2, E1-3, E1-4, E2-1, E2-2, E2-3, E2-4 ist es möglich, durch Bestimmung der Differenzen der Laufzeiten nicht axiale Geschwindigkeitskomponenten zu eliminieren. Zudem kann diese Anordnung von zweiunddreißig Ultraschallwandlern in beliebiger Anordnung an dem Rohr 10 angeordnet werden, da durch die gekreuzten Sätze S1, S2 von Ebenen E1-1, E1-2, E1-3, E1-4, E2-1, E2-2, E2-3, E2-4 ein unsymmetrisches oder drallbehaftetes Strömungsprofil erfasst werden kann.

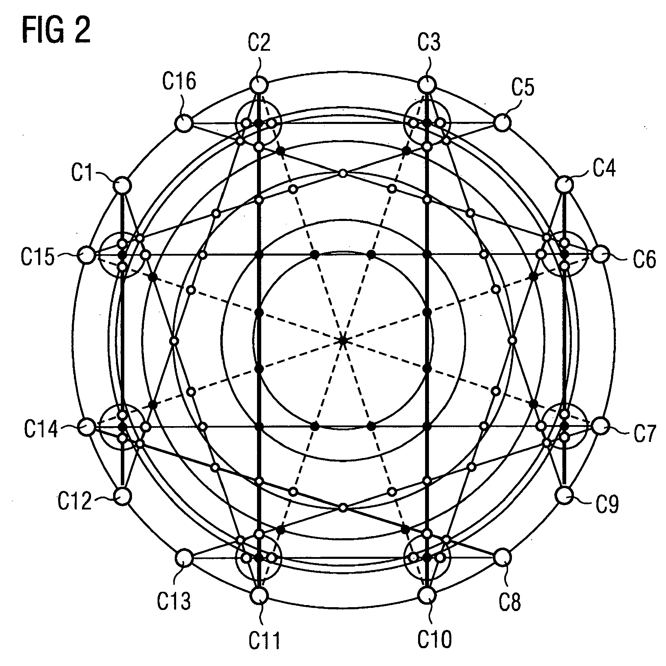

Die Informationsdichte über das Strömungsprofil kann weiter erhöht werden, wenn die Ultraschallwandler C1-C16 sowie die weiteren sechzehn Ultraschallwandler derart ausgebildet sind, dass sie den Ultraschallpuls in einer Keule emittieren bzw. detektieren können und somit Ultraschallpfade nicht nur zwischen zwei einander zugeordneten Ultraschallwandlern in einer Ebene, sondern auch zwischen weiteren in benachbarten Ebenen angeordneten Ultraschallwandlern gebildet werden können. Anhand von Fig. 2 ist schematisch dargestellt, welche zusätzlichen Ultraschallpfade beispielsweise gebildet werden können. Die fett gedruckten senkrechten Linien entsprechen dem Satz S1 von Ebenen gemäß Fig. 1, die waagerecht dazu verlaufenden Linien dem Satz S2 von Ebenen gemäß Fig. 1. Zusätzlich zu dem auf diese Art und Weise gebildeten Ultraschallpfaden können jedoch bei entsprechendem Öffnungswinkel der Ultraschallwandler C1-C16 auch Ultraschallpfade entlang der dünneren geraden Linien gebildet werden. Bspw. kann der Ultraschallwandler C1 zusätzlich in den Ultraschallwandler C11 Ultraschallpulse einstrahlen und von diesem Ultraschallwandler C11 Ultraschallpulse empfangen, während bspw. der Ultraschallwandler C12 zusätzlich mit dem Ultraschallwandler C2 der benachbarten Ebene E1-2 einen Ultraschallpfad bilden kann. Aufgrund der Kreuzung zweier Anordnungen gemäß Fig. 1 wie in Fig. 3a dargestellt, kann zusätzlich der Ultraschallwandler C1 in einen nicht dargestellten Ultraschallwandler C11' bzw. der Ultraschallwandler C12 in einen nicht dargestellten Ultraschallwandler C2' einstrahlen und von diesem Ultraschallpulse empfangen. Ausgehend von einem der Ultraschallwandler C1-C16 können somit insgesamt vier Ultraschallpfade gebildet werden, welche eine hohe Informationsdichte über dem Strömungsprofil ergeben.

Wird der Öffnungswinkel einzelner Ultraschallwandlern C1-C16 weiter erhöht, können ggf. zusätzlich noch die gestrichelten Ultraschallpfade gemäß der Fig. 2 gebildet werden. Bei genügend großem Öffnungswinkel kann ein Ultraschallwandler ggfs. auch mit nahezu allen anderen Ultraschallwandler einen Ultraschallpfad bilden.

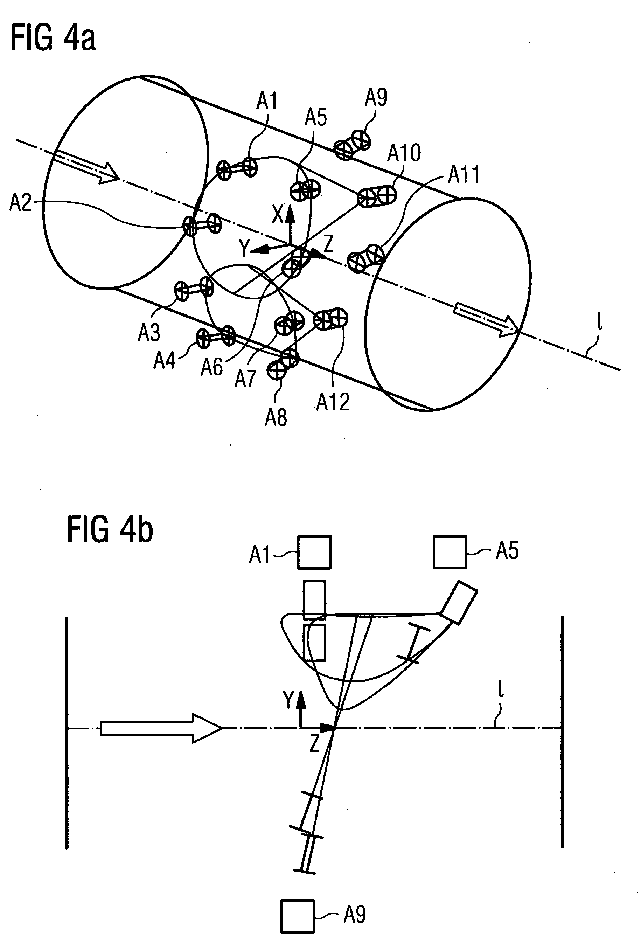

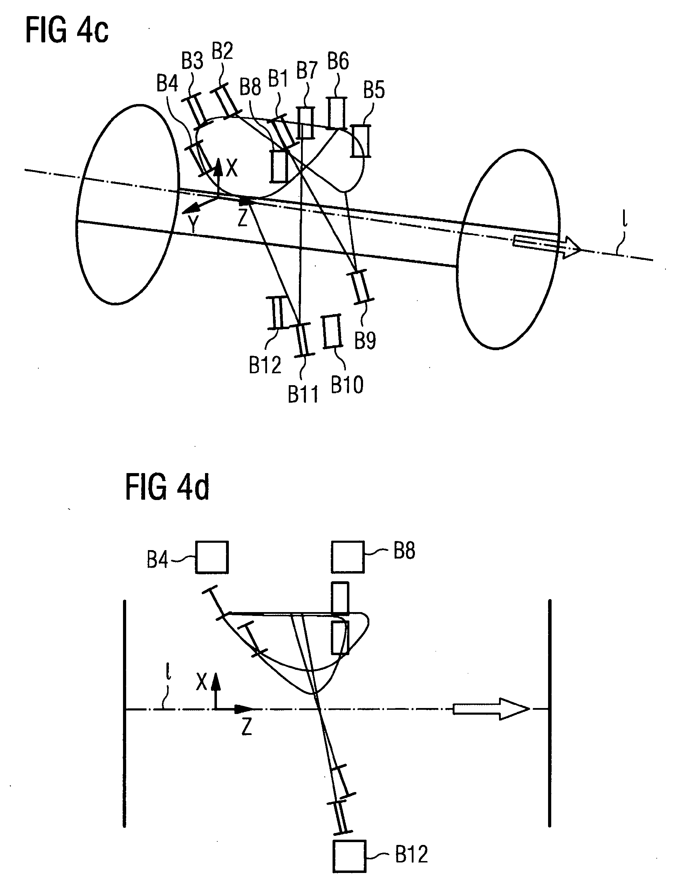

Anhand der Figuren 3b und 4a, 4b, 4c und 4d wird ein zweites Ausführungsbeispiel der Erfindung beschrieben. In diesem Ausführungsbeispiel wurde die Zahl der Ultraschallwandler von zweiunddreißig Ultraschallwandlern gemäß dem Ausführungsbeispiel gemäß Fig. 3a auf vierundzwanzig Ultraschallwandler Al-A12, B1-B12 reduziert. Die Ultraschallwandler A1-A12 sind dabei in einem ersten Satz von vier zueinander parallel versetzt angeordneten Ebenen angeordnet, während die Ultraschallwandler B1-B12 in einem zweiten Satz von vier parallel zueinander angeordneten Ebenen, welcher senkrecht zu dem ersten Satz von Ebenen verläuft, angeordnet sind. Fig. 4b zeigt eine Draufsicht auf eine-erste Ebene des ersten Satzes von Ebenen, in welcher bspw. die Ultraschallwandler A1, A5 und A9 angeordnet sind. In einer zweiten Ebene des ersten Satzes sind die Ultraschallwandler A2, A6 und A10, in einer dritten Ebene die drei Ultraschallwandler A3, A7 und A11 und in einer vierten Ebene des ersten Satzes die Ultraschallwandler A4, A8 und A12 angeordnet. Auch Fig. 3b zeigt eine Seitenansicht auf eine dieser Ebenen, insbesondere auf die erste Ebene, in welcher die Ultraschallwandler A1, A5 und A9 angeordnet sind. Die Ultraschallwandler sind dabei derart angeordnet, dass von dem Ultraschallwandler A9 die beiden in dieser Ebene liegenden Pfade ausgehen, sodass ein erster Pfad zwischen den Ultraschallwandlern A9 und A1 und der zweite Pfad zwischen den Ultraschallwandlern A9, A5 gebildet wird.

Beispielhaft zeigt die Fig. 4d eine erste Ebene des zweiten Satzes von Ebenen der zweiten erfindungsgemäßen Anordnung der Ultraschallwandler A1-A12, B1-B12, in welcher die Ultraschallwandler B4, B8 und B12 liegen. In einer zweiten Ebene liegen die Ultraschallwandler B3, B7 und B11, in einer dritten Ebene die Ultraschallwandler B2, B6 und B10 und in einer vierten Ebene die Ultraschallwandler B1, B5 und B9. Nur zur besseren Übersicht sind die Ultraschallwandler A1-A12 in Fig. 4a und die Ultraschallwandler B1-B12 in Fig. 4c dargestellt, die gesamte Anordnung gemäß dem zweiten Ausführungsbeispiel umfasst die Ultraschallwandler A1-A12 und B1-B12. Wie Fig. 4a zu entnehmen ist, weisen die Ultraschallwandler jeweils einen Öffnungskegel auf, sodass bspw. in dem Kegel des Ultraschallwandlers A10 nicht nur die Ultraschallwandler A2 und A6, sondern auch die Ultraschallwandler A1 und A5 liegen.

Fig. 3 zeigt schematisch eine Ausschnittsdarstellung eines dritten Ausführungsbeispieles der Erfindung. Wie gemäß dem zweiten Ausführungsbeispiel gemäß Fig. 3b, sind insgesamt vierundzwanzig Elemente über den Außenumfang des Rohres 10 verteilt. Dabei werden jedoch acht der Ultraschallwandler gemäß dem zweiten Ausführungsbeispiel durch Reflektoren R1 ersetzt. Dies sind insbesondere die Ultraschallwandler, die in dem zweiten Ausführungsbeispiel der Erfindung an der Spitze der V-förmigen Anordnung der in einer Ebene liegenden zwei Pfade angeordnet sind, d. h. der Ultraschallwandler A9, A10, A11, A12, B9, B10, B11 und B12. Die zwei in einer Ebene liegenden Pfade werden somit von einem Ultraschallpuls direkt nacheinander nur durch Reflexion an dem Reflektor R1 umgelenkt durchlaufen, wobei dadurch, dass der gesamte Weg über die zwei Pfade das Rohr 10 zweimal durchquert, radiale Komponenten, welche die Laufzeit beeinflussen können, direkt eliminiert werden. Die Reflektoren R1 müssen dabei derart ausgerichtet sein, dass der von dem Ultraschallwandler an einem Ende des Pfades emittierte Ultraschallpuls in den anderen Ultraschallwandler reflektiert wird. Als Material für die Reflektoren ist insbesondere ein schallhärtes Material, bspw. eine glatte Oberfläche, vonnöten.

Die drei erfindungsgemäßen Anordnungen von Ultraschallwandlern erlauben ein verbessertes Verfahren zur Bestimmung des Volumenstromes und insbesondere eine tomographische Rekonstruktion des Strömungsprofiles basierend auf aus den Pfaden gewonnenen Messwerten, auf mathematischen Algorithmen, beispielsweise aus der Freiformflächenmodellierung, und physikalischen Gesetzen der Rohrleitungsströmung. Dabei werden Umfangskomponenten der Strömung durch Kreuzung der Pfade in Richtung der Rohrachse eliminiert und durch die Dopplung der Pfade in axialer Richtung, d. h. die Anordnung von zwei Pfaden in einer Ebene parallel zur Längsachse des Rohres, ist es möglich, die axialen Komponenten sowie die nicht axialen Komponenten der Geschwindigkeit zu rekonstruieren. Eine präzise Messung des Volumenstromes und eine Konstruktion des Strömungsprofiles ist auch in stark unsymmetrischen oder drallbehafteten Strömungen möglich.

Durch die erfindungsgemäße Vorrichtung wird zudem die Linearität des Messgerätes verbessert und insbesondere die Empfindlichkeit des Messgerätes gegenüber veränderten Einbausituationen reduziert. Die erfindungsgemäße Anordnung stellt einen Mittelweg zwischen der Anforderung einerseits, möglichst wenig Ultraschallwandler oder sonstige Komponenten zu verwenden, um die Konstruktion einfach zu halten, und der Anforderung andererseits, eine hohe Informationsdichte zur Rekonstruktion des Strömungsprofiles bereitzustellen, um die Bewegung des Fluids mit hoher Genauigkeit bestimmen zu können, dar. Eine tomographische Rekonstruktion der Geschwindigkeitsverteilung über dem Querschnitt ist trotz der geringeren Zahl von Ultraschallwandlern möglich, da zusätzlich physikalische Modellannahmen für die Rohrströmung die geringe Informationsdichte kompensieren. Dadurch ist eine präzise Beurteilung der Geschwindigkeitsverteilung über dem Querschnitt möglich.

Anstelle der Geschwindigkeitsverteilung oder zusätzlich ist weiterhin durch die Anordnung der Sonden eine Rekonstruktion des Temperaturfeldes oder auch des Feldes der turbulenten kinetischen Energie, d. h. der Turbulenz, möglich. Insbesondere kann die Anordnung sowohl zur Ermittlung der Bewegung von Gasen als auch von Flüssigkeiten verwendet werden.

### Bezugszeichenliste

- 10: Rohr

- 1: Längsachse

- S1: erster Satz von Ebenen
- S2: zweiter Satz von Ebenen

- E1-1 - E2-4: Ebene

- C1-C16: Ultraschallwandler
- C1', C12': Ultraschallwandler

- A1-A12: Ultraschallwandler

- B1-B12: Ultraschallwandler

- R1: Reflektor

## Patentansprüche

1. Vorrichtung zum Messen der Bewegung eines Fluids in einem Rohr (10) mit einer Längsachse (1) durch Berechnen der Differenz zwischen Ultraschall-Laufzeiten entlang eines Pfads in der einen und der anderen Richtung,
wobei in dem Rohr (10) ein erster Satz (S1) von wenigstens zwei zueinander parallel versetzt liegenden Ebenen (E1-1, E1-2, E1-3, E1-4) und ein zweiter Satz (S2) von wenigstens zwei zueinander parallel versetzt liegenden Ebenen (E2-1, E2-2, E2-3, E2-4) angeordnet ist, wobei jede der Ebenen (E1-1, E1-2, E1-3, E1-4, E2-1, E2-2, E2-3, E2-4) parallel zur Längsachse angeordnet ist, wobei die beiden Sätze (S1, S2) von Ebenen (E1-1, E1-2, E1-3, E1-4, E2-1, E2-2, E2-3, E2-4) in einem Winkel zueinander verlaufen **dadurch gekennzeichnet, dass** in jeder der Ebenen (E1-1, E1-2, E1-3, E1-4, E2-1, E2-2, E2-3, E2-4) wenigstens zwei Pfade in einem Winkel zueinander verlaufen, wobei jeder der Pfade entweder zwischen zwei Ultraschallwandlern(C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) oder zwischen einem Ultraschallwandler (A1, A2, A3, A4, A5, A6, A7, A8, B1, B2, B3, B4, B5, B6, B7, B8) und einer Reflektorfläche (R1) gebildet ist.

2. Vorrichtung nach Anspruch 1,
**dadurch gekennzeichnet, dass** sowohl der erste Satz (S1) als auch der zweite Satz (S2) jeweils vier Ebenen (E1-1, E1-2, E1-3, E1-4, E2-1, E2-2, E2-3, E2-4) aufweist.

3. Vorrichtung nach Anspruch 1 oder 2,
dadurch gekenntzeichnet, dass in jedem der beiden Sätze (S1, S2) von Ebenen (E1-1, E1-2, E1-3, E1-4, E2-1, E2-2, E2-3, E2-4) die Ebenen (E1-1, E1-2, E1-3, E1-4, E2-1, E2-2, E2-3, E2-4) gleichmäßig, insbesondere symmetrisch, über einen Durchmesser des Rohres (10) verteilt angeordnet sind.

4. Vorrichtung nach einem der vorhergehenden Ansprüche,
**dadurch gekennzeichnet, dass** in jedem der beiden Sätze (S1, S2) von Ebenen (E1-1, E1-2, E1-3, E1-4, E2-1, E2-2, E2-3, E2-4) die Lage der Ebenen (E1-1, E1-2, E1-3, E1-4, E2-1, E2-2, E2-3, E2-4) den mathematisch idealen Stützstellen für numerische Integration entspricht.

5. Vorrichtung nach einem der vorhergehenden Ansprüche,
**dadurch gekennzeichnet, dass** die beiden Sätze (S1, S2) von Ebenen (E1-1, E1-2, E1-3, E1-4, E2-1, E2-2, E2-3, E2-4) im rechten Winkel zueinander angeordnet sind.

6. Vorrichtung nach einem der vorhergehenden Ansprüche,
**dadurch gekennzeichnet, dass** die Ultraschallwandler (C1, C2, C3, C4, C5, C6, C7, C8, C9, C10, C11, C12, C13, C14, C15, C16, C1' C12', A1, A2, A3, A4, A5, A6, A7, A8, A9, A10, A11, A12, B1 B2, B3, B4, B5, B6, B7, B8, B9, B10, B11, B12) und/oder die Reflektorflächen (R1) an der Rohrwandung angeordnet sind.

7. Vorrichtung nach einem der vorhergehenden Ansprüche,
**dadurch gekennzeichnet, dass** in jeder Ebene (E1-1, E1-2, E1-3, E1-4, E2-1, E2-2, E2-3, E2-4) vier Ultraschallwandler (C1, C2, C3, C4, C5, C6, C7, C8, C9, C10, C11, C12, C13, C14, C15, C16, C1', C12') angeordnet sind.

8. Vorrichtung nach einem der Ansprüche 1 bis 6,
**dadurch gekennzeichnet, dass** in jeder Ebene (E1-1, E1-2, E1-3, E1-4, E2-1, E2-2, E2-3, E2-4) drei Ultraschallwandler (A1, A2, A3, A4, A5, A6, A7, A8, A9, A10, A11, A12, B1, B2, B3, B4, B5, B6, B7, B8, B9, B10, B11, B12) angeordnet sind.

9. Vorrichtung nach einem der Ansprüche 1 bis 6,
**dadurch gekennzeichnet, dass** in jeder Ebene (E1-1, E1-2, E1-3, E1-4, E2-1, E2-2, E2-3, E2-4) zwei Ultraschallwandler (A1, A2, A3, A4, A5, A6, A7, A8, B1, B2, B3, B4, B5, B6, B7, B8) und eine Reflektorfläche (R1) angeordnet sind.

10. Vorrichtung nach einem der vorhergehenden Ansprüche,
**dadurch gekennzeichnet, dass** jeder der Ultraschallwandler (C1, C2, C3, C4, C5, C6, C7, C8, C9, C10, C11, C12, C13, C14, C15, C16, C1' C12', A1, A2, A3, A4, A5, A6, A7, A8, A9, A10, A11, A12, B1, B2, B3, B4, B5, B6, B7, B8, B9, B10, B11, B12) einen derartigen Öffnungswinkel des emittierten bzw. detektierten Ultraschallpulses aufweist, dass der Ultraschallpuls auch von in benachbarten Ebenen (E1-1, E1-2, E1-3, E1-4, E2-1, E2-2, E2-3, E2-4) angeordneten Ultraschallwandlern (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) detektierbar ist.

11. Verfahren zum Messen der Bewegung eines Fluids in einem Rohr (10) mit einer Längsachse (1) durch Berechnen der Differenz zwischen Ultraschall-Laufzeiten entlang der Pfads in der einen und der anderen Richtung einer Vorrichtung gemäß einem der vorhergehenden Ansprüche.

12. Verfahren nach Anspruch 11,
**dadurch gekennzeichnet, dass** die gemessenen Ultraschall-Laufzeiten und/oder die berechneten Differenzen der gemessenen Ultraschall-Laufzeiten zur Lösung von analytischen Gleichungen, welche physikalische Annahmen über die Strömung in dem Rohr darstellen, herangezogen werden,

13. Verfahren nach Anspruch 11 oder 12,
**dadurch gekennzeichnet, dass** basierend auf den gemessenen Ultraschall-Laufzeiten und/oder den berechneten Differenzen der gemessenen Ultraschall-Laufzeiten und auf physikalischen Annahmen für die Strömung im Rohr (10) mit Hilfe eines Rekonstruktionsalgorithmus das Strömungsprofil und/oder die Temperaturverteilung und/oder die Turbulenz ermittelt wird.

## Claims

1. Device for measuring the movement of a fluid in a tube (10) having a longitudinal axis (1) by calculating the difference between ultrasonic transit times along a path in one direction and the other, wherein a first set (S1) of at least two planes (E1-1, E1-2, E1-3, E1-4) that are located with parallel displacement relative to one another and a second set (S2) of at least two planes (E2-1, E2-2, E2-3, E2-4) that are located with parallel displacement relative to one another are arranged in the tube (10), wherein each of the planes (E1-1, E1-2, E1-3, E1-4, E2-1, E2-2, E2-3, E2-4) is arranged parallel to the longitudinal axis, wherein both sets (S1, S2) of planes (E1-1, E1-2, E1-3, E1-4, E2-1, E2-2, E2-3, E2-4) run at an angle to each other,
**characterised in that**
in each of the planes (E1-1, E1-2, E1-3, E1-4, E2-1, E2-2, E2-3, E2-4), at least two paths run at an angle to one another, wherein each of the paths is either formed between two ultrasonic transducers (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) or between an ultrasonic transducer (A1, A2, A3, A4, A5, A6, A7, A8, B1, B2, B3, B4, B5, B6, B7, B8) and a reflector surface (R1).

2. Device according to claim 1,
**characterised in that**
the first set (S1) and the second set (S2) each have four planes (E1-1, E1-2, E1-3, E1-4, E2-1, E2-2, E2-3, E2-4).

3. Device according to claim 1 or 2,
**characterised in that**
the planes (E1-1, E1-2, E1-3, E1-4, E2-1, E2-2, E2-3, E2-4) are arranged with equal, in particular symmetrical, distribution over a diameter of the tube (10) in each of the two sets (S1, S2) of planes (E1-1, E1-2, E1-3, E1-4, E2-1, E2-2, E2-3, E2-4).

4. Device according to one of the preceding claims,
**characterised in that**
in each of the two sets (S1, S2) of planes (E1-1, E1-2, E1-3, E1-4, E2-1, E2-2, E2-3, E2-4), the location of the planes (E1-1, E1-2, E1-3, E1-4, E2-1, E2-2, E2-3, E2-4) corresponds to the mathematically ideal grid points for numerical integration.

5. Device according to one of the preceding claims,
**characterised in that**
both sets (S1, S2) of planes (E1-1, E1-2, E1-3, E1-4, E2-1, E2-2, E2-3, E2-4) are arranged at a right angle to each other.

6. Device according to one of the preceding claims,
**characterised in that**
the ultrasonic transducers (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) and/or the reflector surfaces (R1) are arranged on the tube wall.

7. Device according to one of the preceding claims,
**characterised in that**
four ultrasonic transducers (C1, C2, C3, C4, C5, C6, C7, C8, C9, C10, C11, C12, C13, C14, C15, C16, C1', C12') are arranged in each of the planes (E1-1, E1-2, E1-3, E1-4, E2-1, E2-2, E2-3, E2-4).

8. Device according to one of claims 1 to 6,
**characterised in that**
three ultrasonic transducers (A1, A2, A3, A4, A5, A6, A7, A8, A9, A10, A11, A12, B1, B2, B3, B4, B5, B6, B7, B8, B9, B10, B11, B12) are arranged in each plane (E1-1, E1-2, E1-3, E1-4, E2-1, E2-2, E2-3, E2-4).

9. Device according to one of claims 1 to 6,
**characterised in that**
two ultrasonic transducers (A1, A2, A3, A4, A5, A6, A7, A8, B1, B2, B3, B4, B5, B6, B7, B8) and one reflector surface (R1) are arranged in each plane (E1-1, E1-2, E1-3, E1-4, E2-1, E2-2, E2-3, E2-4).

10. Device according to one of the preceding claims,
**characterised in that**
each of the ultrasonic transducers (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) has such an opening angle of the emitted or detected ultrasonic pulse that the ultrasonic pulse is also able to be detected by ultrasonic transducers (C1, C2, C3, C4, C5, C6, C7, C8, C9, C10, C11, C12, C13, C14, C15, C16, C1', C12', A1, A2, A3, A4, A5, A6, A7, A8, A9, A10, A11 A12, B1, B2, B3, B4, B5, B6, B7, B8, B9, B10, B11, B12) arranged in adjacent planes (E1-1, E1-2, E1-3, E1-4, E2-1, E2-2, E2-3, E2-4).

11. Method for measuring the movement of a fluid in a tube (10) having a longitudinal axis (1) by calculating the difference between ultrasonic transit times along the path in one direction and the other of a device according to one of the preceding claims.

12. Method according to claim 11,
**characterised in that**
the measured ultrasonic transit times and/or the calculated differences between the measured ultrasonic transit times are used to solve analytical equations which represent physical assumptions about the flow in the tube.

13. Method according to claim 11 or 12,
**characterised in that**, with the aid of a reconstruction algorithm, the flow profile and/or the temperature distribution and/or the turbulence is determined based on the measured ultrasonic transit times and/or the calculated differences between the measured ultrasonic transit times, and based on physical assumptions for the flow in the tube (10).

## Revendications

1. Dispositif de mesure du mouvement d'un fluide dans un tube (10) ayant un axe longitudinal (1) par calcul de la différence entre les durées de propagation des ultrasons le long d'un chemin dans l'une ou dans l'autre direction, selon lequel dans le tube (10) sont montés un premier groupe (S1) d'au moins deux plans décalés s'étendant parallèlement les uns aux autres (E1-1, E1-2, E1-3 ; E1-4) et un second groupe (S2) d'au moins deux plans décalés s'étendant parallèlement les uns aux autres (E2-1, E2-2, E2-3, E2-4), chacun des plans (E1-1, E1-2, E1-3 ; E1-4, E2-1, E2-2, E2-3, E2-4) s'étendant parallèlement à l'axe longitudinal, et les deux groupes (S1, S2) de plans (E1-1, E1-2, E1-3, E1-4, E2-1, E2-2, E2-3, E2-4) s'étendant angulairement les uns par rapport aux autres,
**caractérisé en ce que**
dans chacun des plans (E1-1, E1-2, E1-3, E1-4, E2-1, E2-2, E2-3, E2-4) s'étendent au moins deux chemins décalés angulairement, chacun de ces chemins étant formé soit entre deux transducteurs à ultrasons (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) soit entre un transducteur à ultrasons (A1, A2, A3, A4, A5, A6, A7, A8, B1, B2, B3, B4, B5, B6, B7, B8) et une surface de réflecteur (R1).

2. Dispositif conforme à la revendication 1,
**caractérisé en ce que**
le premier groupe (S1) et également le second groupe (S2) renferment chacun quatre plans (E1-1, E1-2, E1-3, E1-4, E2-1, E2-2, E2-3, E2-4).

3. Dispositif conforme à la revendication 1 ou 2,
**caractérisé en ce que**
dans chacun des deux groupes (S1, S2) de plans (E1-1, E1-2, E1-3, E1-4, E2-1, E2-2, E2-3, E2-4) les plans (E1-1, E1-2, E1-3, E1-4, E2-1, E2-2, E2-3, E2-4) sont répartis uniformément, en particulier symétriquement sur un diamètre du tube (10).

4. Dispositif conforme à l'une des revendications précédentes,
**caractérisé en ce que**
dans chacun des deux groupes (S1, S2) de plans (E1-1, E1-2, E1-3, E1-4, E2-1, E2-2, E2-3, E2-4), la position des plans (E1-1, E1-2, E1-3, E1-4, E2-1, E2-2, E2-3, E2-4) correspond aux repères mathématiques idéaux pour permettre une intégration numérique.

5. Dispositif conforme à l'une des revendications précédentes,
**caractérisé en ce que**
les deux groupes (S1, S2) de plans (E1-1, E1-2, E1-3, E1-4, E2-1, E2-2, E2-3, E2-4) sont situés à angle droit l'un par rapport à l'autre.

6. Dispositif conforme à l'une des revendications précédentes,
**caractérisé en ce que**
le transducteur à ultrasons (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5, B6, B7, B8, B9, B10, B11, B12) et/ou les surfaces de réflecteur (R1) sont situés sur la paroi du tube.

7. Dispositif conforme à l'une des revendications précédentes,
**caractérisé en ce que**
dans chaque plan (E1-1, E1-2, E1-3, E1-4, E2-1, E2-2, E2-3, E2-4) sont montés quatre transducteurs à ultrasons (C1, C2, C3, C4, C5, C6, C7, C8, C9, C10, C11, C12, C13, C14, C15, C16, C1', C12').

8. Dispositif conforme à l'une des revendications 1 à 6,
**caractérisé en ce que**
dans chaque plan (E1-1, E1-2, E1-3, E1-4, E2-1, E2-2, E2-3, E2-4) sont montés trois transducteurs à ultrasons (A1, A2, A3, A4, A5, A6, A7, A8, A9, A10, A11, A12, B1, B2, B3, B4, B5, B6, B7, B8, B9, B10, B11, B12).

9. Dispositif conforme à l'une des revendications 1 à 6,
**caractérisé en ce que**
dans chacun des plans (E1-1, E1-2, E1-3, E1-4, E2-1, E2-2, E2-3, E2-4) sont montés deux transducteurs à ultrasons (A1, A2, A3, A4, A5, A6, A7, A8, B1, B2, B3, B4, B5, B6, B7, B8) et une surface de réflecteur (R1).

10. Dispositif conforme à l'une des revendications précédentes,
**caractérisé en ce que**
chacun des transducteurs à ultrasons (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5,; B6, B7, B8, B9, B10, B11, B12) a un angle de divergence de l'impulsion ultrasonore émise ou détectée tel que l'impulsion ultrasonore puisse également être détectée par les transducteurs à ultrasons (C1, C2, C3, C4, C5, C6, C7, C8, C9, C10, C11, C12, C13, C14, C15, C16, C1', C12', A1, A2, A3, A4, A5, A6, A7, A8, A9, A10, A11, A12, B1, B2, B3, B4, B5; B6, B7, B8, B9, B10, B11, B12) situés dans des plans voisins (E1-1, E1-2, E1-3, E1-4, E2-1, E2-2, E2-3, E2-4).

11. Procédé de mesure du mouvement d'un fluide dans un tube (10) ayant un axe longitudinal par calcul des différences entre les durées de propagation des ultrasons le long du chemin dans l'une ou dans l'autre direction d'un dispositif conforme à l'une des revendications précédentes.

12. Procédé conforme à la revendication 11,
**caractérisé en ce que**
les durées de propagation des ultrasons mesurées et/ou les différences calculées entre les durées de propagation des ultrasons mesurées sont utilisées pour résoudre des équations analytiques qui représentent des hypothèses physiques concernant l'écoulement dans le tube.

13. Procédé conforme à la revendication 11 ou 12,
**caractérisé en ce que**
sur le fondement des durées de propagation des ultrasons mesurées et/ou des différences des durées de propagation des ultrasons mesurées calculées et des hypothèses physiques pour l'écoulement dans le tube (10), on détermine, à l'aide d'un algorithme de reconstruction, le profil d'écoulement et/ou la distribution de température et/ou la turbulence.
